# EUROPÄISCHE PATENTSCHRIFT

(11) **EP 3 886 131 B1**
(45) Veröffentlichungstag und Bekanntmachung des Hinweises auf die Patenterteilung: **13.03.2024**
(21) Anmeldenummer: 20166134.5
(22) Anmeldetag: 27.03.2020
(51) Int. Cl.: H01H 23/02, B60K 37/00, B60Q 1/00

(54) **WIPPSCHALTER, SCHALTEREINHEIT UND VERFAHREN ZUM AUSWÄHLEN EINES ZUSTANDS EINES VERSCHIEDENE ZUSTÄNDE AUFWEISENDEN BELEUCHTUNGSSYSTEMS**
ROCKER SWITCH, SWITCH UNIT AND METHOD FOR SELECTING A STATE OF A LIGHTING SYSTEM HAVING DIFFERENT STATES
COMMUTATEUR À BASCULE, UNITÉ DE COMMUTATEUR ET PROCÉDÉ DE SÉLECTION D'UN ÉTAT D'UN SYSTÈME D'ÉCLAIRAGE COMPRENANT DIVERS ÉTATS

(43) Veröffentlichungstag der Anmeldung: 29.09.2021
(73) Patentinhaber: Ford Global Technologies, LLC, Dearborn, MI 48126 (US)
(72) Erfinder: Bechtel, Nikolaus, 51427 Bergisch Gladbach (DE)
(74) Vertreter: Markowitz, Markus

(56) Entgegenhaltungen:
- EP-A1- 2 657 949
- DE-A1-102010 009 329
- US-A1- 2018 130 628

## Beschreibung

Die Erfindung betrifft einen Wippschalter zum Auswählen eines Zustands eines wenigstens zwei verschiedene Zustände aufweisenden Beleuchtungssystems eines Kraftwagens, aufweisend wenigstens eine manuell betätigbare Schaltwippe. Zudem betrifft die Erfindung eine Schaltereinheit zum Auswählen eines Zustands eines wenigstens zwei verschiedene Zustände aufweisenden Beleuchtungssystems eines Kraftwagens, aufweisend wenigstens zwei Wippschalter mit jeweils einer Schaltwippe, wobei die Schaltwippen parallel zueinander angeordnete Wippachsen aufweisen. Ferner betrifft die Erfindung ein Verfahren zum Auswählen eines Zustands eines wenigstens zwei verschiedene Zustände aufweisenden Beleuchtungssystems eines Kraftwagens.

Bei einer Entwicklung einer Schalterleiste mit manuell betätigbaren und bewegbar angeordneten Betätigungselementen und bei einer Integration solcher Betätigungselemente in eine Funktionseinheit eines Fahrzeuginterieurs besteht die Notwendigkeit, für jedes Betätigungselement eine Einzelgeometrie vorzusehen, damit sich das jeweilige Betätigungselement auf seinem Betätigungsweg bewegen kann, wenn es manuell betätigt wird. Hierzu ist es erforderlich, einen das jeweilige Betätigungselement umgebenden Spalt an der Schalterleiste bzw. Funktionseinheit vorzusehen, der die Bewegbarkeit des jeweiligen Betätigungselements gewährleistet.

Um einer Schalterleiste bzw. Funktionseinheit eine zeitgemäßere und hochwertigere Anmutung zu verleihen, ist es bekannt, statt der bewegbaren Betätigungselemente kapazitive Schaltelemente zu verwenden, die ohne Spalte zwischen Schaltelementen verbaut werden können, da sie bei ihrer Betätigung nicht bewegt werden müssen. Allerdings ist diese Technik relativ kostenintensiv und daher bislang nicht weit verbreitet und lediglich in hochpreisigen Fahrzeugen zu finden.

EP 2 657 949 A1 offenbart einen Wippschalter zum Auswählen eines Zustands eines wenigstens zwei verschiedene Zustände aufweisenden Systems, aufweisend wenigstens eine manuell betätigbare Schaltwippe.

Der Erfindung liegt die Aufgabe zugrunde, ein Auswählen eines Zustands eines wenigstens zwei verschiedene Zustände aufweisenden Beleuchtungssystems eines Kraftwagens unter Verwendung von wenigstens einem kostengünstig herstellbaren Wippschalter mit hochwertiger Anmutung zu ermöglichen.

Erfindungsgemäß wird die Aufgabe durch einen Wippschalter mit den Merkmalen des Anspruchs 1 gelöst, wobei an einer Oberfläche der Schaltwippe wenigstens zwei Betätigungsflächen zum wahlweisen manuellen Betätigen der Schaltwippe und wenigstens zwei zwischen den Betätigungsflächen angeordnete Anzeigeabschnitte angeordnet sind, wobei die Anzeigeabschnitte verschiedenen Zuständen des Beleuchtungssystems zugeordnet sind und jeweils wenigstens ein Leuchtelement aufweisen und die Leuchtelemente durch eine manuelle Betätigung der Schaltwippe wechselweise einzeln aktivierbar sind.

Es ist darauf hinzuweisen, dass die in der nachfolgenden Beschreibung einzeln aufgeführten Merkmale sowie Maßnahmen in beliebiger technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit der Figur zusätzlich.

Erfindungsgemäß werden durch die einzelne Schaltwippe des Wippschalters sowohl die Betätigungsflächen, als auch die zwischen den Betätigungsflächen angeordneten Anzeigeabschnitte gebildet, so dass hierzu nicht zwei oder mehr bewegbar angeordnete Schalterkomponenten vorhanden sind, die über Spalte voneinander getrennt werden müssten. Stattdessen ist lediglich ein einziges bzw. durchgehendes Bauteil vorhanden, nämlich die Schaltwippe. Hierdurch weist der erfindungsgemäße Wippschalter im Vergleich zu einer herkömmlichen Schalterleiste bzw. Funktionseinheit, bei der mehrere Komponenten unter Belassung von Zwischenspalten angeordnet sind, eine modernere und hochwertigere Anmutung auf. Zudem weist der erfindungsgemäße Wippschalter keine kapazitiven Schaltelemente auf, so dass er kostengünstiger herstellbar ist als eine herkömmliche Schalterleiste bzw. Funktionseinheit mit kapazitiven Schaltelementen.

Von Vorteil ist bei dem erfindungsgemäßen Wippschalter zudem, dass die beiden Betätigungsflächen durch die dazwischen angeordneten Anzeigeabschnitte derart weit voneinander entfernt angeordnet sind, dass eine ungewollte Fehlbedienung des Wippschalters ausgeschlossen werden kann. Der erfindungsgemäße Wippschalter ist zudem mit einer funktional besseren Ausnutzung eines vorhandenen Bauraums verbunden.

Durch eine manuelle Betätigung der Schaltwippe sind die Leuchtelemente der einzelnen Anzeigeabschnitte wechselweise einzeln aktivierbar. Durch eine manuelle Betätigung der einen Betätigungsfläche der Schaltwippe wird die Schaltwippe verlagert und wenigstens ein Schaltkontakt des Wippschalters geschlossen, wodurch ein momentan aktiviertes Leuchtelement eines Anzeigeabschnitts deaktiviert und gleichzeitig oder zeitverzögert ein momentan deaktiviertes Leuchtelement eines weiteren Anzeigeabschnitts aktiviert wird. Durch jede manuelle Betätigung dieser Betätigungsfläche wechselt so die Aktivierung der Leuchtelemente in einer bestimmten Reihenfolge der Anzeigeabschnitte. Durch eine manuelle Betätigung der anderen Betätigungsfläche der Schaltwippe wechselt die Aktivierung der Leuchtelemente in einer hierzu umgekehrten Reihenfolge der Anzeigeabschnitte. Es ist immer nur das Leuchtelemente von einem einzigen Anzeigeabschnitt aktiviert. Ein Anzeigeabschnitt kann auch zwei oder mehr Leuchtelemente aufweisen. An der Oberfläche der Schaltwippe können auch drei oder mehr Anzeigeabschnitte zwischen den Betätigungsflächen angeordnet sein.

Durch die erfindungsgemäße Zuordnung der Anzeigeabschnitte zu verschiedenen Zuständen des Beleuchtungssystems ist so eine Auswahl eines bestimmten Zustands des Beleuchtungssystems des Kraftwagens möglich. Hierzu kann an jedem Anzeigeabschnitt jeweils wenigstens ein Symbol angeordnet sein, das denjenigen Zustand des Beleuchtungssystems symbolisiert, der mittels des erfindungsgemäßen Wippschalters ausgewählt ist, wenn das Leuchtelement des jeweiligen Anzeigeabschnitts aktiviert ist. Die Symbole entsprechen vorzugsweise genormten Symbolen, wie beispielsweise einem Symbol für einen Abblendlichtzustand des Beleuchtungssystems, ein Symbol für einen Lichtassistenzzustand des Beleuchtungssystems, ein Symbol für einen Standlichtzustand des Beleuchtungssystems, ein Symbol für einen Auszustand des Beleuchtungssystems und dergleichen. Unter einem Lichtassistenzzustand ist ein Zustand des Beleuchtungssystems zu verstehen, in dem das Beleuchtungssystem ein Abblendlicht in Abhängigkeit von Signalen von wenigstens einem Lichtsensor automatisch ein- und ausschalten kann. Das Symbol kann ein Teil des Leuchtelements des jeweiligen Anzeigeabschnitts sein, so dass das jeweilige Symbol leuchten kann.

Auch an den Betätigungsflächen können Symbole angeordnet sein. Beispielsweise kann durch solche Symbole angezeigt werden, auf welche Weise durch eine manuelle Betätigung der jeweiligen Betätigungsfläche zwischen den einzelnen Anzeigeabschnitten bzw. deren Leuchtelementen gewechselt wird. Hierzu können die Symbole beispielsweise als Pfeile ausgebildet sein. Auch diese Symbole können als Leuchtelement ausgebildet sein oder nicht.

Der erfindungsgemäße Wippschalter kann eine Elektronik aufweisen, die in Abhängigkeit der manuellen Betätigung der Betätigungsflächen das jeweilige Leuchtelement aktiviert bzw. deaktiviert. Die Schaltwippe des Wippschalters ist vorzugsweise derart angeordnet und gelagert, dass sie nach einer manuellen Betätigung einer Betätigungsfläche wieder in eine nicht gekippte mittlere Ausgangsstellung zurückkehrt. Hierzu kann der Wippschalter wenigstens ein Federelement aufweisen, dass durch eine manuelle Betätigung einer Betätigungsfläche unter Erzeugung einer Rückstellkraft elastisch verformt wird. Das Federelement kann beispielsweise als geformte Silikonmatte ausgebildet sein, die zwischen der Schaltwippe und wenigstens einem weiteren Bauteil des Wippschalters angeordnet ist. Die Schaltwippe kann durch ihre Betätigung um eine gedachte Achse (Wippachse) verlagert werden, die sich zudem bei einer Betätigung der Schaltwippe verlagern kann.

An der Oberfläche der Schaltwippe können zwei Betätigungsflächen zum wahlweisen manuellen Betätigen der Schaltwippe und wenigstens zwei zwischen den Betätigungsflächen angeordnete Anzeigeabschnitte und zusätzlich zwei weitere Betätigungsflächen, die jeweils benachbart zu einer der beiden Betätigungsflächen angeordnet sind und zum wahlweisen manuellen Betätigen der Schaltwippe dienen, und entweder wenigstens eine zwischen den weiteren Betätigungsflächen angeordnete Durchbrechung oder wenigstens zwei zwischen den weiteren Betätigungsflächen angeordnete Anzeigeabschnitte angeordnet sein. Hierbei kann die Schaltwippe dreidimensional verlagerbar an dem Wippschalter angeordnet sein. Die weiteren Betätigungsflächen können jeweils wenigstens ein Leuchtelement aufweisen, die durch eine manuelle Betätigung der Schaltwippe einzeln aktivierbar sind.

Die Anzeigeabschnitte sind in einer Reihe zwischen den Betätigungsflächen angeordnet. Hierdurch ist die Schaltwippe langgestreckt ausgebildet und weist an ihren in Längsrichtung gegebenen Endabschnitten jeweils eine Betätigungsfläche auf. Dadurch kann eine manuelle Fehlbedienung des Wippschalters noch besser verhindert werden, da die Betätigungsflächen noch weiter voneinander beabstandet sind. Die Anordnung der Anzeigeabschnitte in einer Reihe zwischen den Betätigungsflächen geht zudem mit einer intuitiven Bedienbarkeit des Wippschalters bzw. einer intuitiven Auswählbarkeit eines Zustands des Beleuchtungssystems einher.

Eine weitere vorteilhafte Ausgestaltung sieht vor, dass an der Oberfläche der Schaltwippe vier Anzeigeabschnitte zwischen den Betätigungsflächen angeordnet sind, wobei ein Anzeigeabschnitt einem Abblendlichtzustand des Beleuchtungssystems, ein Anzeigeabschnitt einem Lichtassistenzzustand des Beleuchtungssystems, ein Anzeigeabschnitt einem Standlichtzustand des Beleuchtungssystems und ein Anzeigeabschnitt einem Auszustand des Beleuchtungssystems zugeordnet ist. Wenn die vier Anzeigeabschnitte zudem in einer Reihe zwischen den Betätigungsflächen angeordnet sind, sind die Betätigungsflächen relativ weit voneinander entfernt angeordnet, was eine ungewollte Fehlbedienung des Wippschalters zuverlässig verhindert.

Die obige Aufgabe wird zudem durch eine Schaltereinheit mit den Merkmalen des Anspruchs 4 gelöst, bei der wenigstens ein Wippschalter nach einer der oben genannten Ausgestaltungen oder einer Kombination von wenigstens zwei dieser Ausgestaltungen miteinander ausgebildet ist.

Mit der Schaltereinheit sind die oben mit Bezug auf den Wippschalter genannten Vorteile entsprechend verbunden. Der weitere Wippschalter der Schaltereinheit kann ebenfalls nach einer der oben genannten Ausgestaltungen oder einer Kombination von wenigstens zwei dieser Ausgestaltungen miteinander ausgebildet sein. Alternativ kann der weitere Wippschalter anders ausgebildet sein. Die Wippachsen der Schaltwippen können gedachte Achsen sein, die sich zudem bei einer Betätigung der jeweiligen Schaltwippe verlagern können.

Gemäß einer vorteilhaften Ausgestaltung sind an einer Oberfläche der Schaltwippe eines weiteren Wippschalters der Schaltereinheit wenigstens zwei Betätigungsflächen zum wahlweisen manuellen Betätigen der Schaltwippe des weiteren Wippschalters und wenigstens eine zwischen den Betätigungsflächen angeordnete Durchbrechung angeordnet, wobei die Betätigungsflächen verschiedenen Zuständen des Beleuchtungssystems zugeordnet sind und jeweils wenigstens ein Leuchtelement aufweisen, wobei die Leuchtelemente durch eine manuelle Betätigung der Schaltwippe wechselweise einzeln aktivierbar sind und wobei der weitere Wippschalter wenigstens ein durch die Durchbrechung hindurch zugänglich angeordnetes Auswahlrad einer Leuchtweitenregulierung des Beleuchtungssystems aufweist.

Die vorzugsweise einstückig ausgebildete Schaltwippe des weiteren Wippschalters weist also endseitig die Betätigungsflächen bzw. diese bereitstellende Betätigungsabschnitte und die Betätigungsabschnitte miteinander verbindende Zwischenabschnitte auf, wobei die Durchbrechung einerseits zwischen den Betätigungsabschnitten und andererseits zwischen den Zwischenabschnitten angeordnet ist. Hierdurch sind nicht zwei separate Betätigungselemente vorhanden, die über Spalte voneinander getrennt werden müssten. Stattdessen ist lediglich ein einziges bzw. durchgehendes Bauteil vorhanden, nämlich die weitere Schaltwippe. Hierdurch weist die Schaltereinheit im Vergleich zu einer herkömmlichen Schalterleiste bzw. Funktionseinheit, bei der mehrere Komponenten unter Belassung von Zwischenspalten angeordnet sind, eine modernere und hochwertigere Anmutung auf. Zudem weist die Schaltereinheit keine kapazitiven Schaltelemente auf, so dass sie kostengünstiger herstellbar ist als eine herkömmliche Schalterleiste bzw. Funktionseinheit mit kapazitiven Schaltelementen.

Von Vorteil ist zudem, dass die beiden Betätigungsflächen der Schaltwippe des weiteren Wippschalters durch die dazwischen angeordnete Durchbrechung derart weit voneinander entfernt angeordnet sind, dass eine ungewollte Fehlbedienung des weiteren Wippschalters ausgeschlossen werden kann.

Durch eine manuelle Betätigung der einen Betätigungsfläche der Schaltwippe des weiteren Wippschalters wird die Schaltwippe verlagert und wenigstens ein Schaltkontakt des weiteren Wippschalters geschlossen, wodurch das momentan deaktivierte Leuchtelement an dem manuell betätigten Betätigungsfläche aktiviert bzw. das momentan aktivierte Leuchtelement an dem manuell betätigten Betätigungsfläche deaktiviert werden kann. Gleiches kann bei einer manuellen Betätigung der anderen Betätigungsfläche realisiert sein. Eine Betätigungsfläche kann auch zwei oder mehr Leuchtelemente aufweisen.

An jeder Betätigungsfläche kann jeweils wenigstens ein Symbol angeordnet sein, das denjenigen Zustand des Beleuchtungssystems symbolisiert, der mittels des weiteren Wippschalters ausgewählt ist, wenn das Leuchtelement der jeweiligen Betätigungsfläche aktiviert ist. Die Symbole entsprechen vorzugsweise genormten Symbolen, wie beispielsweise einem Symbol für einen Nebelfrontlichtzustand des Beleuchtungssystems, ein Symbol für einen Nebelschlusslichtzustand des Beleuchtungssystems und dergleichen. Das Symbol kann ein Teil des Leuchtelements der jeweiligen Betätigungsfläche sein, so dass das jeweilige Symbol leuchten kann.

Der weitere Wippschalter kann eine Elektronik aufweisen, die in Abhängigkeit der manuellen Betätigung der Betätigungsflächen der Schaltwippe des weiteren Wippschalters das jeweilige Leuchtelement aktiviert bzw. deaktiviert. Die Schaltwippe des weiteren Wippschalters ist vorzugsweise derart angeordnet und gelagert, dass sie nach einer manuellen Betätigung einer Betätigungsfläche wieder in eine nicht gekippte mittlere Ausgangsstellung zurückkehrt. Hierzu kann der weitere Wippschalter wenigstens ein Federelement aufweisen, dass durch eine manuelle Betätigung einer Betätigungsfläche unter Erzeugung einer Rückstellkraft elastisch verformt wird.

Die obige Aufgabe wird ferner durch ein Verfahren mit den Merkmalen des Anspruchs 6 gelöst, gemäß dem der jeweilige Zustand des Beleuchtungssystems unter Verwendung eines Wippschalters nach einer der oben genannten Ausgestaltungen oder einer Kombination von wenigstens zwei dieser Ausgestaltungen miteinander oder unter Verwendung einer Schaltereinheit nach einer der oben genannten Ausgestaltungen oder einer Kombination von wenigstens zwei dieser Ausgestaltungen miteinander ausgewählt wird.

Mit dem Verfahren sind die oben mit Bezug auf den Wippschalter bzw. die Schaltereinheit genannten Vorteile entsprechend verbunden. Insbesondere kann der Wippschalter gemäß einer der oben genannten Ausgestaltungen oder einer Kombination von wenigstens zwei dieser Ausgestaltungen miteinander oder die Schaltereinheit gemäß einer der oben genannten Ausgestaltungen oder einer Kombination von wenigstens zwei dieser Ausgestaltungen miteinander zur Durchführung des Verfahrens verwendet werden.

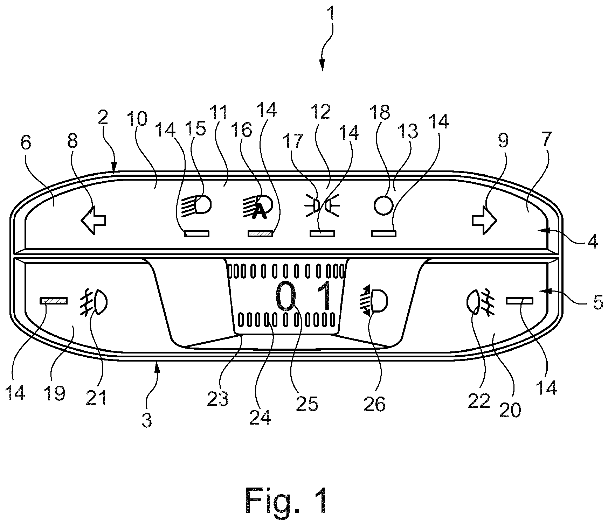

Weitere vorteilhafte Ausgestaltungen der Erfindung sind in den Unteransprüchen und der folgenden Figurenbeschreibung offenbart. Es zeigt
- Fig. 1: eine schematische Darstellung eines Ausführungsbeispiels für eine erfindungsgemäße Schaltereinheit.

Fig. 1 zeigt eine schematische Darstellung eines Ausführungsbeispiels für eine erfindungsgemäße Schaltereinheit 1 zum Auswählen eines Zustands eines mehrere verschiedene Zustände aufweisenden, nicht gezeigten Beleuchtungssystems eines nicht gezeigten Kraftwagens.

Die Schaltereinheit 1 weist zwei Wippschalter 2 und 3 mit jeweils einer manuell betätigbaren Schaltwippe 4 bzw. 5 auf, wobei die Schaltwippen 4 und 5 parallel zueinander angeordnete, nicht gezeigte gedachte Wippachsen aufweisen.

An einer dem Betrachter von Fig. 1 zugewandten Oberfläche der Schaltwippe 4 sind zwei Betätigungsflächen 6 und 7 zum wahlweisen manuellen Betätigen der Schaltwippe 4 angeordnet. An jeder Betätigungsfläche 6 bzw. 7 ist ein Symbol 8 bzw. 9 in Form eines Pfeils angeordnet. Die Symbole 8 und 9 können beleuchtet bzw. hinterleuchtet sein. Die Pfeile weisen in entgegengesetzte Richtungen, insbesondere voneinander weg.

Zudem sind an der Oberfläche der Schaltwippe 4 vier in einer Reihe zwischen den Betätigungsflächen 6 und 7 angeordnete Anzeigeabschnitte 10 bis 13 angeordnet, die verschiedenen Zuständen des Beleuchtungssystems zugeordnet sind und jeweils ein Leuchtelement 14 aufweisen. Der Anzeigeabschnitt 10 ist einem Abblendlichtzustand des Beleuchtungssystems, der Anzeigeabschnitt 11 einem Lichtassistenzzustand des Beleuchtungssystems, der Anzeigeabschnitt 12 einem Standlichtzustand des Beleuchtungssystems und der Anzeigeabschnitt 13 einem Auszustand des Beleuchtungssystems zugeordnet. Hierzu sind die Anzeigeabschnitte 10 bis 13 mit entsprechenden Symbolen 15 bis 18 versehen. Die Symbole 15 bis 18 können beleuchtet bzw. hinterleuchtet sein und die Reihenfolge der Symbole 15 bis 18 kann variieren.

Die Leuchtelemente 14 sind durch eine manuelle Betätigung der Schaltwippe 4 wechselweise einzeln aktivierbar. In dem in Fig. 1 gezeigten Zustand der Schaltereinheit 1 ist allein das Leuchtelement 14 des Anzeigeabschnitts 11 aktiviert, während die übrigen Leuchtelemente 14 deaktiviert sind. Es ist also ein Lichtassistenzzustand des Beleuchtungssystems aktiviert. Durch eine manuelle Betätigung der Betätigungsfläche 7 wird ausgehend von dem in Fig. 1 gezeigten Zustand der Schaltereinheit 1 das Leuchtelement 14 des Anzeigeabschnitts 11 deaktiviert und das Leuchtelement 14 des Anzeigeabschnitts 12 aktiviert. Durch eine manuelle Betätigung der Betätigungsfläche 7 wechselt die Aktivierung der Leuchtelemente 14 schrittweise entsprechend dem Symbol 9 an der Betätigungsfläche 7 in der Zeichnungsebene nach rechts. Durch eine manuelle Betätigung der Betätigungsfläche 6 wechselt die Aktivierung der Leuchtelemente 14 schrittweise entsprechend dem Symbol 8 an der Betätigungsfläche 6 in der Zeichnungsebene nach links.

An einer dem Betrachter von Fig. 1 zugewandten Oberfläche der Schaltwippe 5 des weiteren Wippschalters 3 der Schaltereinheit 1 sind zwei Betätigungsflächen 19 und 20 zum wahlweisen manuellen Betätigen der Schaltwippe 5 des weiteren Wippschalters 3 angeordnet. An jeder Betätigungsfläche 19 bzw. 20 ist ein Symbol 21 bzw. 22 angeordnet, wobei das Symbol 21 einen Nebelfrontlichtzustand des Beleuchtungssystems und das Symbol 22 einen Nebelschlusslichtzustand des Beleuchtungssystems symbolisiert. Die Betätigungsflächen 19 und 20 sind also verschiedenen Zuständen des Beleuchtungssystems zugeordnet. Die Symbole 21 und 22 können beleuchtet bzw. hinterleuchtet sein. Jede Betätigungsfläche 19 bzw. 20 weist jeweils ein Leuchtelement 14 auf.

Zudem ist an der Oberfläche der Schaltwippe 5 des weiteren Wippschalters 3 eine zwischen den Betätigungsflächen 19 und 20 angeordnete Durchbrechung 23 angeordnet. Der weitere Wippschalter 3 weist ein durch die Durchbrechung 23 hindurch zugänglich angeordnetes Auswahlrad 24 einer Leuchtweitenregulierung des Beleuchtungssystems auf. Hierzu sind an dem Auswahlrad 24 Zahlensymbole 25 angeordnet. Zudem ist an der Schaltwippe 5 ein Symbol 26 angeordnet, dass die Leuchtweitenregulierung symbolisiert.

Die Leuchtelemente 14 sind durch eine manuelle Betätigung der Schaltwippe 5 wechselweise einzeln aktivierbar. In dem in Fig. 1 gezeigten Zustand der Schaltereinheit 1 ist allein das Leuchtelement 14 der Betätigungsfläche 19 aktiviert, während das Leuchtelement 14 der Betätigungsfläche 20 deaktiviert ist. Es sind also frontseitige Nebelscheinwerfer des Kraftwagens eingeschaltet, während eine Nebelschlussleuchte des Kraftwagens ausgeschaltet ist. Durch eine manuelle Betätigung der Betätigungsfläche 19 wird ausgehend von dem in Fig. 1 gezeigten Zustand der Schaltereinheit 1 das Leuchtelement 14 der Betätigungsfläche 19 deaktiviert. Durch eine manuelle Betätigung der Betätigungsfläche 20 wird ausgehend von dem in Fig. 1 gezeigten Zustand der Schaltereinheit 1 das Leuchtelement 14 der Betätigungsfläche 20 aktiviert.

### Bezugszeichenliste:

- 1: Schaltereinheit
- 2: Wippschalter
- 3: Wippschalter
- 4: Schaltwippe
- 5: Schaltwippe
- 6: Betätigungsfläche an 2
- 7: Betätigungsfläche an 2
- 8: Symbol an 6
- 9: Symbol an 7
- 10: Anzeigeabschnitt
- 11: Anzeigeabschnitt
- 12: Anzeigeabschnitt
- 13: Anzeigeabschnitt
- 14: Leuchtelement
- 15: Symbol an 10
- 16: Symbol an 11
- 17: Symbol an 12
- 18: Symbol an 13
- 19: Betätigungsfläche an 5
- 20: Betätigungsfläche an 5
- 21: Symbol an 19
- 22: Symbol an 20
- 23: Durchbrechung an 5
- 24: Auswahlrad
- 25: Zahlensymbol an 24
- 26: Symbol an 5

## Patentansprüche

1. Wippschalter (2) zum Auswählen eines Zustands eines wenigstens zwei verschiedene Zustände aufweisenden Beleuchtungssystems eines Kraftwagens, aufweisend wenigstens eine manuell betätigbare Schaltwippe (4), wobei an einer Oberfläche der Schaltwippe (4) wenigstens zwei Betätigungsflächen (6, 7) zum wahlweisen manuellen Betätigen der Schaltwippe (4) angeordnet sind,
**gekennzeichnet durch**
wenigstens zwei in Reihe zwischen den Betätigungsflächen (6, 7) angeordnete Anzeigeabschnitte (10, 11, 12, 13), wobei die Anzeigeabschnitte (10, 11, 12, 13) verschiedenen Zuständen des Beleuchtungssystems zugeordnet sind und jeweils wenigstens ein Leuchtelement (14) aufweisen und die Leuchtelemente (14) durch eine manuelle Betätigung der Schaltwippe (4) wechselweise einzeln aktivierbar sind.

2. Wippschalter (2) nach Anspruch 1,
**dadurch gekennzeichnet, dass**
an der Oberfläche der Schaltwippe (4) vier Anzeigeabschnitte (10, 11, 12, 13) zwischen den Betätigungsflächen (6, 7) angeordnet sind, wobei ein Anzeigeabschnitt (10) einem Abblendlichtzustand des Beleuchtungssystems, ein Anzeigeabschnitt (11) einem Lichtassistenzzustand des Beleuchtungssystems, ein Anzeigeabschnitt (12) einem Standlichtzustand des Beleuchtungssystems und ein Anzeigeabschnitt (13) einem Auszustand des Beleuchtungssystems zugeordnet ist.

3. Schaltereinheit (1) zum Auswählen eines Zustands eines wenigstens zwei verschiedene Zustände aufweisenden Beleuchtungssystems eines Kraftwagens, aufweisend wenigstens zwei Wippschalter (2, 3) mit jeweils einer Schaltwippe (4, 5), wobei die Schaltwippen (4, 5) parallel zueinander angeordnete Wippachsen aufweisen,
**dadurch gekennzeichnet, dass**
wenigstens ein Wippschalter (2) nach einem der vorhergehenden Ansprüche ausgebildet ist.

4. Schaltereinheit (1) nach Anspruch 3,
**dadurch gekennzeichnet, dass**
an einer Oberfläche der Schaltwippe (5) eines weiteren Wippschalters (3) der Schaltereinheit (1) wenigstens zwei Betätigungsflächen (19, 20) zum wahlweisen manuellen Betätigen der Schaltwippe (5) des weiteren Wippschalters (3) und wenigstens eine zwischen den Betätigungsflächen (19, 20) angeordnete Durchbrechung (23) angeordnet sind, wobei die Betätigungsflächen (19, 20) verschiedenen Zuständen des Beleuchtungssystems zugeordnet sind und jeweils wenigstens ein Leuchtelement (14) aufweisen, wobei die Leuchtelemente (14) durch eine manuelle Betätigung der Schaltwippe (5) wechselweise einzeln aktivierbar sind und wobei der weitere Wippschalter (3) wenigstens ein durch die Durchbrechung (23) hindurch zugänglich angeordnetes Auswahlrad (24) einer Leuchtweitenregulierung des Beleuchtungssystems aufweist.

5. Verfahren zum Auswählen eines Zustands eines wenigstens zwei verschiedene Zustände aufweisenden Beleuchtungssystems eines Kraftwagens,
**dadurch gekennzeichnet, dass**
der jeweilige Zustand des Beleuchtungssystems unter Verwendung eines Wippschalters (2) nach einem der Ansprüche 1 oder 2 oder unter Verwendung einer Schaltereinheit (1) nach Anspruch 3 oder 4 ausgewählt wird.

## Claims

1. Paddle switch (2) for selecting a state of a lighting system of a motor vehicle that has at least two different states, the paddle switch having at least one manually actuable switch paddle (4), wherein at least two actuation areas (6, 7) for selectively actuating the switch paddle (4) manually are arranged on a surface of the switch paddle (4),
**characterized by**
at least two display sections (10, 11, 12, 13) arranged in series between the actuation areas (6, 7), wherein the display sections (10, 11, 12, 13) are assigned to different states of the lighting system and each have at least one light-emitting element (14) and the light-emitting elements (14) are individually alternately activatable by manually actuating the switch paddle (4).

2. Paddle switch (2) according to Claim 1,
**characterized in that**
four display sections (10, 11, 12, 13) are arranged on the surface of the switch paddle (4) between the actuation areas (6, 7), wherein one display section (10) is assigned to a dipped-beam state of the lighting system, one display section (11) is assigned to a light assistance state of the lighting system, one display section (12) is assigned to a sidelight state of the lighting system, and one display section (13) is assigned to an off-state of the lighting system.

3. Switch unit (1) for selecting a state of a lighting system of a motor vehicle that has at least two different states, the switch unit having at least two paddle switches (2, 3) with in each case one switch paddle (4, 5), wherein the switch paddles (4, 5) have paddle axes that are parallel to one another,
**characterized in that**
at least one paddle switch (2) is designed according to either of the preceding claims.

4. Switch unit (1) according to Claim 3,
**characterized in that**
at least two actuation areas (19, 20) for selectively manually actuating the switch paddle (5) of the further paddle switch (3) and at least one opening (23) arranged between the actuation areas (19, 20) are arranged on a surface of the switch paddle (5) of a further paddle switch (3) of the switch unit (1), wherein the actuation areas (19, 20) are assigned to different states of the lighting system and each have at least one light-emitting element (14), wherein the light-emitting elements (14) are individually alternately activatable by a manual actuation of the switch paddle (5) and wherein the further paddle switch (3) has at least one selection wheel (24) for light-emission regulation of the lighting system, the selection wheel being arranged so as to be accessible through the opening (23).

5. Method for selecting a state of a lighting system of a motor vehicle that has at least two different states,
**characterized in that**
the respective state of the lighting system is selected using a paddle switch (2) according to either of Claims 1 and 2 or using a switch unit (1) according to Claim 3 or 4.

## Revendications

1. Commutateur à bascules (2) destiné à sélectionner un état d'un système d'éclairage, présentant au moins deux états différents, d'un véhicule automobile, ledit commutateur comportant au moins une bascule de commutation (4) actionnable manuellement, au moins deux surfaces d'actionnement (6, 7) étant disposées sur une surface de la bascule de commutation (4) pour actionner manuellement et sélectivement la bascule de commutation (4),
**caractérisé par**
au moins deux portions d'affichage (10, 11, 12, 13) disposées en série entre les surfaces d'actionnement (6, 7),
les portions d'affichage (10, 11, 12, 13) étant associées à différents états du système d'éclairage et comportant chacune au moins un élément d'éclairage (14) et les éléments d'éclairage (14) pouvant être activés individuellement en alternance par un actionnement manuel de la bascule de commutation (4).

2. Commutateur à bascules (2) selon la revendication 1,
**caractérisé en ce que**
quatre portions d'affichage (10, 11, 12, 13) sont disposées sur la surface de la bascule de commutation (4) entre les surfaces d'actionnement (6, 7), une portion d'affichage (10) étant associée à un état de feu de croisement du système d'éclairage, une portion d'affichage (11) étant associée à un état d'assistance de feu du système d'éclairage, une portion d'affichage (12) étant associée à un état de feu de stationnement du système d'éclairage et une portion d'affichage (13) étant associée à un état de désactivation du système d'éclairage.

3. Unité de commutateurs (1) destinée à sélectionner un état d'un système d'éclairage, présentant au moins deux états différents, d'un véhicule automobile, ladite unité de commutateurs comprenant au moins deux commutateurs à bascules (2, 3) comprenant chacun une bascule de commutation (4, 5), les bascules de commutation (4, 5) comportant des axes de bascule disposés parallèlement les uns aux autres,
**caractérisée en ce que**
au moins un commutateur à bascules (2) est conçu selon l'une des revendications précédentes.

4. Unité de commutateurs (1) selon la revendication 3,
**caractérisée en ce que**
au moins deux surfaces d'actionnement (19, 20), destinées à actionner manuellement et sélectivement la bascule de commutation (5) de l'autre commutateur à bascules (3), et au moins un passage (23) ménagé entre les surfaces d'actionnement (19, 20) sont disposés sur une surface de la bascule de commutation (5) d'un autre commutateur à bascules (3) de l'unité de commutateurs (1), les surfaces d'actionnement (19, 20) étant associées à différents états du système d'éclairage et comportant chacune au moins un élément d'éclairage (14), les éléments d'éclairage (14) pouvant être activés individuellement en alternance par un actionnement manuel de la bascule de commutation (5) et l'autre commutateur à bascules (3) comportant au moins une molette de sélection (24) d'un moyen de réglage de portée du système d'éclairage, laquelle molette de sélection est accessible par le passage (23).

5. Procédé de sélection d'un état d'un système d'éclairage, présentant au moins deux états différents, d'un véhicule automobile,
**caractérisé en ce que**
l'état respectif du système d'éclairage est sélectionné à l'aide d'un commutateur à bascules (2) selon l'une des revendications 1 ou 2 ou à l'aide d'une unité de commutateurs (1) selon la revendication 3 ou 4.
